(19) Europäisches Patentamt
European Patent Office
Office européen des brevets

(11) **EP 3 891 465 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **19839330.8**

(22) Anmeldetag: **05.11.2019**

(51) Internationale Patentklassifikation (IPC):
**G01B 11/06** (2006.01)  **G01B 11/24** (2006.01)

(52) Gemeinsame Patentklassifikation (CPC):
**G01B 11/0608; G01B 11/24; G01B 2210/50**

(86) Internationale Anmeldenummer:
**PCT/DE2019/200123**

(87) Internationale Veröffentlichungsnummer:
**WO 2020/114562 (11.06.2020 Gazette 2020/24)**

(54) **OPTISCHE MESSEINRICHTUNG**

OPTICAL MEASURING APPARATUS

DISPOSITIF DE MESURE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2018 DE 102018130901**

(43) Veröffentlichungstag der Anmeldung:
**13.10.2021 Patentblatt 2021/41**

(73) Patentinhaber: **Precitec Optronik GmbH**
**63263 Neu-Isenburg (DE)**

(72) Erfinder: **DIETZ, Christoph**
**63179 Obertshausen (DE)**

(74) Vertreter: **Schweiger, Martin**
**Patentanwalt**
**Martin Schweiger**
**Erhardtstraße 12**
**80469 München (DE)**

(56) Entgegenhaltungen:
**DE-B3-102011 117 523    US-A1- 2012 206 710**

EP 3 891 465 B1

**Beschreibung**

Die vorliegende Offenbarung betrifft eine optische Messeinrichtung, insbesondere eine optisch-chromatische Messeinrichtung zur Vermessung eines Objekts.

Es sind optische Messeinrichtungen zur Vermessung von Objekten bekannt. Aus der EP 2 076 733 B1 ist ein Messgerät zur Oberflächen- und Dickenbestimmung von Objekten bekannt, welches eine polychromatische Lichtquelle und einen optischen Prozessorteil mit einer dispersiven Komponente umfasst, welche eine auf das zu messende Objekt gerichtete optische Strahlung chromatisch in eine nicht-axiale Richtung dispergiert. Verschiedene Wellenlänge der optischen Strahlung werden dabei in unterschiedlichen Höhen in Richtung der Normalen der Objektoberfläche fokussiert. Ein zweiter Prozessorteil für optische Strahlung richtet Licht, welches vom Messobjekt in Spiegelreflexionsrichtung reflektiert wird, auf einen Detektor, welcher dazu eingerichtet ist, zur Bestimmung einer Oberflächenhöhe eine Wellenlänge maximaler Intensität zu bestimmen. US 2012/206710 A1 offenbart ein Messgerät und Verfahren zur Bestimmung der Eigenschaften eines Gegenstandes und seiner Oberfläche. DE 10 2011 117523 B3 offenbart eine Vorrichtung zur optischen Bestimmung der Oberflächengeometrie einer dreidimensionalen Probe.

Es ist eine Aufgabe der Erfindung, eine verbesserte Messeinrichtung zur Vermessung eines Objekts anzugeben.

Gemäß einem Aspekt der Offenbarung wird eine Messvorrichtung vorgeschlagen, welche eine Lichtquelle umfasst, die eine Mehrzahl von Wellenlängen emittiert und deren Licht durch eine erste konfokale Blende in eine Beleuchtungs-Abbildungsoptik geleitet wird. Die Beleuchtungs-Abbildungsoptik umfasst ein erstes aufspaltendes optisches Element, welches als Prisma oder Gitter ausgeführt ist. Das erste aufspaltende optische Element spaltet das Licht in Abhängigkeit der Wellenlänge auf, d.h., dass Licht unterschiedlicher Wellenlängen, welches im gleichen Winkel auf das aufspaltende optische Element fällt, das aufspaltende optische Element unter unterschiedlichem Winkel verlässt. Im Falle eines Prismas ist dies der Dispersion geschuldet, während im Falle eines Gitters als Ausgangslicht die erste oder eine höhere Beugungsordnung (positive oder negative Beugungsordnungen) verwendet wird, welche spektral aufgespalten ist.

Das Licht tritt dabei für alle Wellenlängen kollimiert in das erste aufspaltende optische Element ein. Dies ist nur dann möglich, wenn zwischen Lichtquelle und erstem aufspaltenden optischen Element kein Element mit einer deutlich wellenlängenabhängigen Brennweite angeordnet ist, insbesondere keine Linse oder Linsenkombination mit ausgeprägter chromatischer Aberration.

Die Beleuchtungs-Abbildungsoptik umfasst zusätzlich ein erstes Linsensystem mit mindestens einer ersten Linse. Das erste Linsensystem ist vom ersten aufspaltenden optischen Element räumlich getrennt, es handelt sich um zwei separate Elemente. Das erste Linsensystem zeichnet sich dadurch aus, dass seine effektive Brennweite sich für verschiedene Wellenlängen signifikant unterscheidet. Diese Eigenschaft ist auch als chromatische Längsaberration bekannt.

Das Licht wird durch die Beleuchtung-Abbildungsoptik fokussiert, wobei Fokussierorte, insbesondere Fokuspunkte bzw. Fokuslinien, unterschiedlicher Wellenlängen an unterschiedlichen Orten gebildet werden. Die Orte liegen entlang eines Messsegments, insbesondere Liniensegments bzw. Flächensegments, welches einen spitzen Winkel zur Symmetrieachse des ersten Linsensystems bildet.

Der Bereich des Liniensegments bzw. Flächensegments, auf dem die Fokuspunkte bzw. Fokuslinien liegen, stellt den Messbereich der Messeinrichtung dar. Ein Objekt, welches das Liniensegment schneidet und zumindest ein Teil des Lichts reflektiert, kann vermessen werden.

Durch die chromatische Längsaberration des ersten Linsensystems wird der Abstand der Fokuspunkte vom Linsensystem wellenlängenabhängig variiert. Ohne eine signifikante Längsaberration wären die Fokuspunkte annähernd senkrecht zur Symmetrieachse aufgereiht.

Die Messeinrichtung umfasst auch eine Detektions-Abbildungsoptik, welche räumlich getrennt von der Beleuchtungs-Abbildungsoptik ist. Die räumliche Trennung erlaubt die Verwendung kleinerer, leichterer optischer Bauteile. Die Detektions-Abbildungsoptik ist dazu eingerichtet, von dem Objekt reflektiertes Licht aus einer Richtung zu empfangen, welche sich von der Richtung, aus der das Beleuchtungslicht auf das Objekt einfällt, unterscheidet und die Fokuspunkte aller verwendeter Wellenlängen auf eine zweite konfokale Blende abzubilden.

Die zweite konfokale Blende hat den Effekt, Licht von Wellenlängen, die defokussiert auf das Messobjekt treffen und daher nicht genau wieder auf die zweite konfokale Blende abgebildet werden, zu unterdrücken und hierdurch den Hintergrund zu reduzieren und das Signal/Rausch-Verhältnis zu verbessern.

Die Messeinrichtung umfasst auch einen Detektor, welcher dazu eingerichtet ist, Intensität des durch die zweite Blende tretenden Lichts zu erfassen.

Aufgrund der signifikanten Längsaberration kann der Lichteinfallswinkel bei einer hohen Abbildungsqualität der Fokussierorte bzw. Fokuspunkte vergrößert werden, so dass die sogenannten Abschattungseffekte effizient unterdrückt bzw. reduziert werden können.

Die Merkmale der Erfindung haben also den Vorteil, dass der mittlere Einfallswinkel des Messlichts steiler auf dem Messobjekt ist, wodurch Abschattung reduziert wird.

Andererseits ist der Einfallswinkel auch nicht senkrecht auf dem Objekt, wodurch es möglich wird, dass Beleuchtungs-Abbildungsoptik und Detektions-Abbildungsoptik getrennt ausgeführt werden und die Einfallsrichtung bzw. Empfangsrichtung sich von der Richtung der Aufreihung der Fokuspunkte unterscheidet. Hierdurch wird bewirkt, dass Licht von Wellenlängen, welche nicht auf der Oberfläche des Objektes fokussiert sind, nicht nur defokussiert auf der zweiten konfokalen Blende abgebildet werden, sondern zusätzlich seitlich versetzt. Hierdurch tritt weniger Licht derjenigen Wellenlängen, die defokussiert auf dem Objekt sind, durch die zweite konfokale Blende und der Hintergrund wird weiter unterdrückt. Die Auflösung der Messeinrichtung ist alleine durch die Auflösung des verwendeten Objektivs (Beleuchtungs-Abbildungsoptik und Detektions-Abbildungsoptik) vorgegeben.

Bevorzugt schneidet das Liniensegment, auf dem die Fokuspunkte liegen, die Oberfläche des zu vermessenden Objekts im Mittel senkrecht oder nahezu senkrecht. Dies hat den Vorteil, dass die Messung nicht verzerrt wird. Im senkrechten Fall sind die Koordinatenwerte parallel zur Oberfläche (x-/y-Koordinaten) für jeden Fokuspunkt konstant und hängen nicht von der Höhe über der Oberfläche (z) bzw. der Wellenlänge ab. Damit lässt sich die Topographie der Oberfläche direkt in einem kartesischen Koordinatensystem ohne weitere Umrechnung bestimmen. Es entsteht also keine Verzerrung der Oberfläche in der Messung. Bei einem symmetrischen Aufbau von Beleuchtungs-Abbildungsoptik und Detektions-Abbildungsoptik hat eine senkrechte Anordnung des Liniensegments zur Oberfläche außerdem den Vorteil einer höheren Lichtausbeute.

Nachfolgend sind vorteilhafte Ausgestaltungen der Erfindung beschrieben.

Bevorzugt emittiert die Lichtquelle ein kontinuierliches Spektrum. Besonders bevorzugt ist das emittierte Spektrum im Bereich des sichtbaren Lichts (ca. 400-800nm) oder Infrarotbereich.

Die Brennweite des ersten Linsensystems für die kleinste Wellenlänge der Lichtquelle unterscheidet sich von der Brennweite des ersten Linsensystems für die größte Wellenlänge der Lichtquelle um einen Betrag $\delta f$. Bevorzugt beträgt der Quotient aus $\delta f$ und der Brennweite der mittleren Wellenlänge $f_0$ mehr als 5%. Eine solche chromatische Aberration kann als signifikant betrachtet werden.

$$\frac{\delta f}{f_0} > 5\%$$

Die Distanz zwischen dem Fokuspunkt der kleinsten Wellenlänge und dem Fokuspunkt der größten Wellenlänge der Lichtquelle definiert den Messbereich der Messeinrichtung. Für jede Anwendung gibt es einen Messbereich, der sich besonders eignet, bspw. wird dieser vorteilhafterweise größer als die größten Strukturen bzw. zu erwartenden Höhenunterschiede des zu vermessenden Objektes gewählt. Gleichzeitig sollte der Messbereich nicht zu groß gewählt werden, da in aller Regel eine inverse Beziehung zwischen Messbereich und Auflösung besteht. Der Messbereich dieser Anwendung liegt bevorzugt im Bereich weniger Millimeter oder unter einem Millimeter.

Der Messbereich wird durch die Querverschiebung und Längsverschiebung der Fokuspunkte der verschiedenen Wellenlängen in Relation zur Symmetrieachse des ersten Linsensystems vorgegeben. Bevorzugt unterscheiden sich Längsverschiebung und Querverschiebung um weniger als einen Faktor 2, besonders bevorzugt sind sie etwa gleich. In anderen Worten sind sowohl Längs- als auch Querverschiebung von derselben Größenordnung wie der Messbereich selbst.

Vorteilhafterweise werden die Quer- und Längsverschiebungen der Fokuspunkt-Lagen so gewählt, dass das Liniensegment, welche durch die Fokuspunkt-Lagen der unterschiedlichen Wellenlängen geht, einen Winkel kleiner als 60° zur Symmetrieachse des ersten Linsensystems beträgt. Besonders vorteilhaft ist ein Winkel kleiner/gleich 45°. Dies ist besonders geeignet um Abschattungen zu vermeiden und erlaubt eine kompakte Bauweise.

Es ist weiter bevorzugt, dass das Liniensegment, welche durch die Fokuspunkte der unterschiedlichen Wellenlängen geht, einen Winkel größer als 30° zur Symmetrieachse des ersten Linsensystems beträgt.

Bevorzugt unterscheidet sich die Brennweite des ersten Linsensystems für die kleinste Wellenlänge der Lichtquelle von der Brennweite des ersten Linsensystems für die größte Wellenlänge der Lichtquelle um einen Betrag, etwa einem vorgegebenen Messbereich der Messeinrichtung entspricht.

Um eine hinreichende Fokusverschiebung (chromatische Aberration) zu erreichen, hat vorteilhafterweise mindestens eine der Linsen in dem ersten Linsensystem eine Abbe-Zahl $v_d < 40$.

Bevorzugt umfasst die Beleuchtungs-Abbildungsoptik eine Kollimatorlinse, welche zwischen Lichtquelle und erstem aufspaltenden optischen Element angeordnet ist. Diese Kollimatorlinse ist bevorzugt achromatisch, d.h. die Brennweite für unterschiedliche Wellenlängen unterscheidet sich nicht oder nur sehr geringfügig. Dies ermöglicht einen kollimierten Strahlengang aller Wellenlängen. Die Kollimatorlinse kann alternativ durch mehrere Linsen ersetzt werden, welche insgesamt betrachtet die genannten Eigenschaften haben.

Es ist auch möglich, die Kollimatorlinse mit chromatischer Aberration zu versehen, so dass sich die Längsverschiebung der Spots zwischen der Kollimatorlinse und dem ersten Linsensystem aufteilt. Dadurch ist der Strahlengang durch das erste aufspaltende optische Element nicht für alle Wellenlängen perfekt kollimiert.

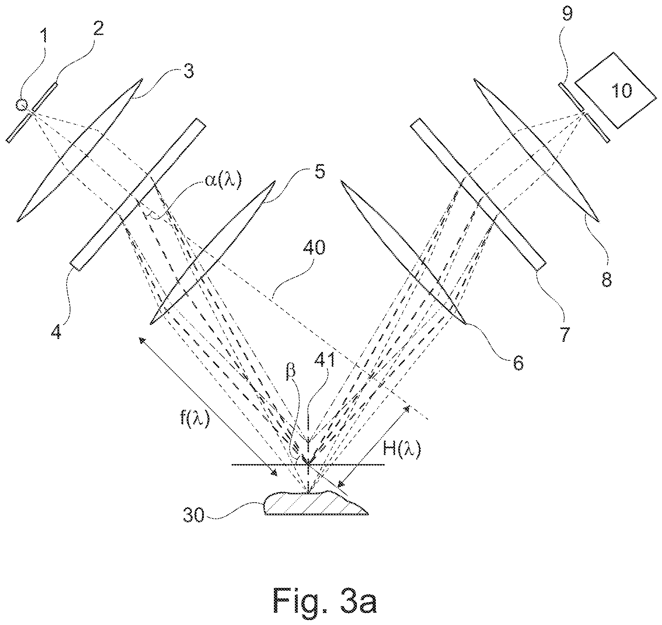

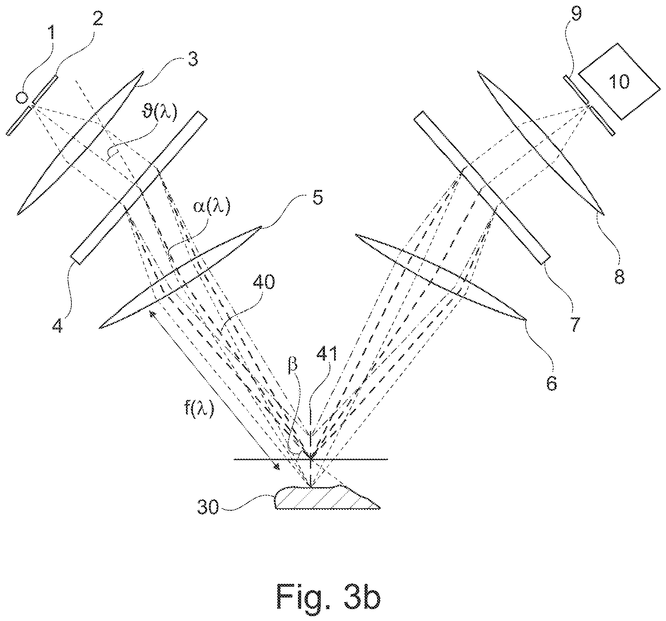

Vorteilhafterweise wird sichergestellt, dass das Liniensegment, auf dem die Fokuspunkte liegen, gerade ist, indem die Wellenlängenabhängigkeit der Brennweite des ersten Linsensystems und die Wellenlängenabhängigkeit der Aufspaltung des ersten aufspaltenden optischen Elements aufeinander abgestimmt werden. Dies erfolgt besonders vorteilhaft über eine Betrachtung einer rechnerischen Beziehung zwischen den Wellenlängenabhängigkeiten (siehe Erläuterungen zu den Figuren 3a und 3b). Bevorzugt wird entweder als erstes aufspaltendes optisches Element ein Prisma gewählt, in Kombination mit einem ersten Linsensystem aus einer oder mehreren dispersiven Linsen, oder es wird als aufspaltendes optisches Element ein Gitter gewählt, in Kombination mit mindestens einer Diffraktivlinse im ersten Linsensystem. Es werden also entweder dispersive Elemente miteinander verwendet oder diffraktive Elemente miteinander. Dadurch kann sichergestellt werden, dass die Querverschiebung und Längsverschiebung der Fokuspunkte zusammenpassen (d.h. einer bis auf einen Proportionalitätsfaktor gleichen mathematischen Beziehung zwischen Verschiebung und Wellenlänge genügen), so dass das Liniensegment gerade ist.

Nach einer bevorzugten Ausführungsform der Erfindung umfasst die Detektions-Abbildungsoptik ein zweites aufspaltendes optisches Element - Prisma oder Gitter - und ein zweites Linsensystem. Dies ermöglicht die Abbildung auf die zweite konfokale Blende auf besonders einfache Weise. Der Strahlengang entspricht dabei vom Prinzip her dem Strahlengang der Beleuchtungs-Abbildungsoptik, jedoch mit Elementen in umgekehrter Reihenfolge. Das zweite aufspaltende optische Element wirkt hier - bedingt durch die umgekehrte Durchlaufrichtung - derart, dass die durch das erste aufspaltende optische Element Aufspaltung rückgängig gemacht wird. Licht, welches von einem der Fokuspunkte der Beleuchtungs-Abbildungsoptik kommt und die dem Fokuspunkt entsprechende Wellenlänge hat, wird also durch die Detektions-Abbildungsoptik für alle Wellenlängen auf denselben Ort fokussiert, vorteilhafterweise auf die Öffnung der zweiten konfokalen Blende.

Bevorzugt ist das zweite aufspaltende optische Element baugleich zum ersten aufspaltenden optischen Element ausgeführt. Insbesondere ist das zweite aufspaltende optische Element ein Prisma, wenn das erste aufspaltende optische Element ein Prisma ist und ist diesem baugleich bzw. das zweite aufspaltende optische Element ist ein Gitter, wenn das erste aufspaltende optische Element ein Gitter ist und ist diesem baugleich.

Bevorzugt ist das zweite Linsensystem ist baugleich zum ersten Linsensystem ausgeführt.

Besonders vorteilhaft ist es, wenn die gesamte Beleuchtungs-Abbildungsoptik und Detektions-Abbildungsoptik baugleich ausgeführt sind. Diese sind dabei spiegelsymmetrisch, so dass der Detektionsstrahlengang genau so ist wie der Beleuchtungsstrahlengang.

Für diese Ausführungsform ist es vorteilhaft, wenn das Liniensegment, auf dem die Fokuspunkte aufgereiht sind, zumindest näherungsweise senkrecht zum zu vermessenden Objekt ist, damit der gesamte Aufbau symmetrisch sein kann.

Vorteilhafterweise liegt das Liniensegment, auf dem die Fokuspunkte aufgereiht sind, auf der Winkelhalbierenden zwischen Beleuchtungsstrahlengang und Detektionsstrahlengang.

Nach einer bevorzugten Ausführungsform der Erfindung umfasst der Detektor ein Spektrometer und ist dazu eingerichtet, Intensitätsmaxima der Wellenlängen zu bestimmen und daraus Abstandswerte des Objektes zu berechnen.

Besonders bevorzugt wird eine Beziehung zwischen Wellenlänge des Intensitätsmaximums und Abstandswerten aufgestellt. Dies erfolgt vorteilhafterweise über eine Kalibrierung der Messeinrichtung. Anhand dieser Beziehung werden die Abstandswerte bestimmt.

Durch den konfokalen Aufbau der Messeinrichtung wird jeweils diejenige Wellenlänge wieder scharf auf der Öffnung der zweiten konfokalen Blende abgebildet, welche auf dem zu vermessenden Objekt fokussiert war. Daher tritt am meisten Intensität dieser Wellenlänge durch die Blende, so dass das Intensitätsmaximum der auf dem Objekt fokussierten Wellenlänge entspricht. Hierdurch lässt sich auf die Lage der Oberfläche des Objektes in Bezug zu den Fokuslagen zurückschließen.

In einer bevorzugten Ausführungsform der Erfindung sind die erste konfokale Blende und die zweite konfokale Blende jeweils Punktblenden, d.h. sie haben eine kreisförmige Öffnung mit einem geringen Querschnitt. Bevorzugt ist der Durchmesser kleiner $100\mu m$, um eine gute laterale Auflösung sicherzustellen. Besonders bevorzugt ist der Durchmesser kleiner $50\mu m$. Es resultiert eine Messung an einem einzelnen Punkt der Objektoberfläche.

In einer alternativen Ausführungsform der Erfindung sind die erste konfokale Blende und die zweite konfokale Blende jeweils Schlitzblenden, d.h. sie haben eine spaltförmige Öffnung. In dieser Ausführungsform werden statt Fokuspunkten Fokuslinien an verschiedenen Orten gebildet, welche statt entlang eines Liniensegments auf einem Flächensegment liegen, dessen eine Dimension der langen Kante der Schlitzblende entspricht und dessen andere Dimension alle Eigenschaften des oben beschriebenen Liniensegments hat. Alle in Bezug auf Fokuspunkte und Liniensegment beschriebene Merkmale finden analog auf Fokuslinien und Flächensegment Anwendung. Die Beleuchtungs-Abbildungsoptik ist derart ausgebildet, dass die Fokuslinien unterschiedlicher Wellenlängen an unterschiedlichen Orten gebildet werden, wobei die Orte entlang eines Flächensegments liegen, welches einen spitzen Winkel zur Symmetrieachse des ersten Liniensystems bildet. Die Messeinrichtung ist dazu ausgebildet, ein Objekt zu vermessen, welches das Flächensegment schneidet. Die Detektions-Abbildungsoptik ist dazu eingerichtet, die Fokuslinien aller Wellenlängen auf die zweite konfokale Blende abzubilden.

Die Schlitzblenden sind so orientiert, dass die erste konfokale Blende auf die zweite konfokale Blende abgebildet wird. Vorteilhafterweise sind die Schlitzblenden so orientiert, dass die Aufspaltung durch das erste aufspaltende optische Element quer zur längeren Dimension des Spalts erfolgt.

Die laterale Auflösung (d.h. in den Richtungen quer zur Höhenmessung) dieser Anordnung ist alleine durch die Auflösung der verwendeten Objektive (Beleuchtungs-Abbildungsoptik und Detektions-Abbildungsoptik) gegeben, da nur der Bereich der Fokuslinien abgebildet wird. Es besteht keine Problematik mit Übersprechen zwischen einzelnen Bildpunkten.

Als eine Variante dieser Ausführungsform sind in einer Reihe angeordnete Punktöffnungen zu verstehen.

In einer bevorzugten Ausführungsform der Erfindung umfasst der Detektor einen Sensor, welcher die durch die zweite konfokale Blende tretende Intensität räumlich aufgelöst misst. Besonders bevorzugt erfolgt in dieser Ausführungsform keine spektrale Aufspaltung innerhalb des Detektors, so dass ein Bild der Gesamtintensität am Ort der zweiten konfokalen Blende erfasst wird. So entsteht eine Bildaufnahme der Objektoberfläche mit durch die chromatische Aufspaltung erhöhte Tiefenschärfe. Vorteilhafterweise ist der Sensor dazu eingerichtet, den Ort des einfallenden Lichts räumlich aufzulösen. Dabei werden Intensitäten einfallenden Lichts an mehreren Orten bestimmt, beispielsweise durch eine Mehrzahl einzelner Pixel. Derart ist eine räumliche Auflösung des einfallenden Lichts entlang mindestens einer Dimension möglich, wobei bevorzugt die Dimension räumlich aufgelöst wird, die der längeren Kante der Schlitzblende entspricht.

Bevorzugt werden Matrixdetektoren verwendet, also Sensoren, welche eine Auflösung der einfallenden Lichtintensität in zwei Dimensionen erlauben.

In einer weiteren bevorzugten Ausführungsform der Erfindung umfasst der Detektor einen Strahlteiler, welcher einen Teil des Lichts zu einem ersten Detektorteil leitet und einen zweiten Teil des Lichts zu einem zweiten Detektorteil. Besonders bevorzugt wird das Licht im ersten Detektorteil spektral aufgespalten und die Wellenlänge maximaler Intensität bestimmt, während im zweiten Detektorteil keine spektrale Aufspaltung erfolgt und ein Gesamtintensitätsbild aufgenommen wird. Das durch den zweiten Detektorteil gewonnene Gesamtintensitätsbild und die durch den ersten Detektorteil gleichzeitig für den gleichen Messbereich gewonnene Höheninformationen kombiniert werden, beispielsweise durch eine Anzeigevorrichtung überlagert dargestellt werden. Besonders bevorzugt ist es möglich, sowohl eine Höheninformation als auch eine in der Ebene quer zur Höhe genauer aufgelöste Gesamtintensitätsabbildung auszuwerten und auszugeben.

Um die Vorteile der Schlitzblende gegenüber einem Raster von Lochblenden auszunutzen, wird bevorzugt das vom Messobjekt reflektierte Licht durch eine Freistrahloptik zwischen dem Messobjekt und dem Detektor propagiert. Es ist weiter bevorzugt, dass das Licht von der Lichtquelle bis zum Messobjekt durch eine Freistrahloptikpropagiert. Dies hat außerdem die Vorteile, dass sich die Messeinrichtung robuster gestalten lässt und billiger zu bauen ist, sowie weitgehend temperaturunabhängig ist.

Nach einer bevorzugten Ausführungsform der Erfindung ist der Strahlteiler ein Strahlteilerwürfel, welcher besonders bevorzugt zwei miteinander verbundene Prismen umfasst, zwischen denen eine Strahlteilerfläche verläuft.

Vorteilhafterweise können das zu vermessende Objekt und die Messeinrichtung relativ zueinander bewegt werden, bevorzugt in zwei oder drei Dimensionen. Diese Bewegung erfolgt bevorzugt automatisch. Es kann auf diese Weise ein Scan über das Objekt erfolgen, so dass eine Mehrzahl an Punkten vermessen werden kann.

Nachfolgend sind beispielhafte vorteilhafte Ausgestaltungen der Erfindung anhand von Figuren erläutert.

Es zeigen:

Fig. 1: eine Schemazeichnung einer beispielhaften Ausführungsform der chromatisch konfokalen Messeinrichtung,
Fig. 2: eine Beleuchtungs-Abbildungsoptik einer aus dem Stand der Technik bekannten Messeinrichtung,
Fig. 3a: eine bevorzugte Ausführungsform der Erfindung,
Fig. 3b: eine weitere bevorzugte Ausführungsform der Erfindung,
Fig. 4: eine weitere bevorzugte Ausführungsform der Erfindung,
Fig. 5: eine weitere bevorzugte Ausführungsform der Erfindung.

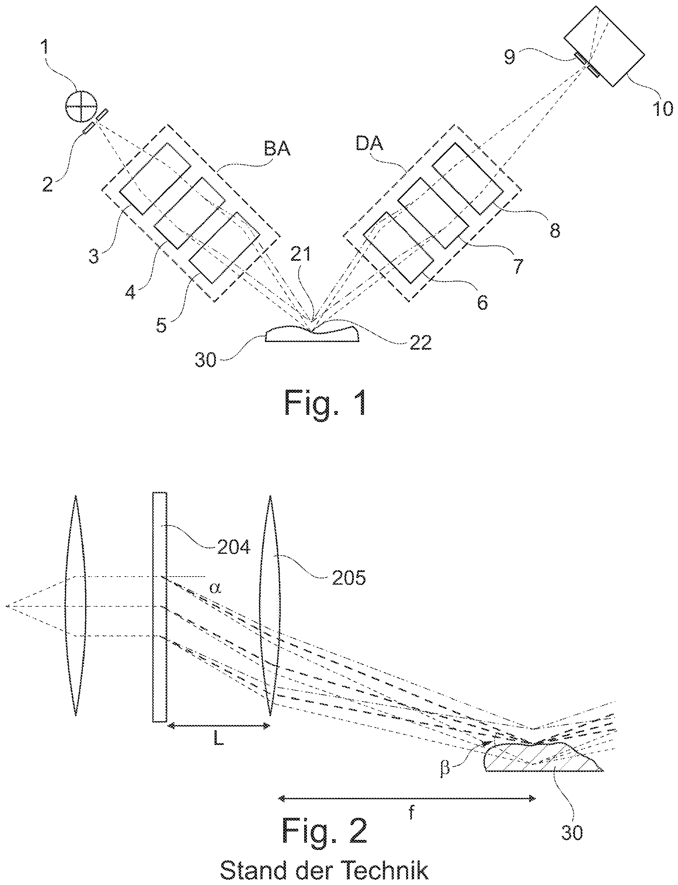

Figur 1 zeigt eine Schemazeichnung einer beispielhaften Ausführungsform der chromatisch konfokalen Messeinrichtung.

Eine Lichtquelle 1 emittiert Strahlung einer Mehrzahl von Wellenlängen. Bevorzugt emittiert sie ein kontinuierliches Spektrum, welches besonders bevorzugt im sichtbaren Bereich liegt. Bei der Lichtquelle handelt es sich beispielsweise um eine LED oder eine Halogenlampe oder eine Lichtquelle, welche durch einen Laser angeregtes Phosphor enthält oder um eine Superkontinuumlichtquelle.

Das Licht tritt durch eine erste konfokale Blende 2. Die Blende hat eine Öffnung, welche bevorzugt kreisförmig mit einem kleinen Durchmesser ist (Punktblende). Alternativ kann die Blende eine spaltförmige Öffnung haben, wobei der Spalt in die Zeichenebene hinein ausgedehnt ist.

Eine Beleuchtungs-Abbildungsoptik (BA) der Messeinrichtung umfasst mindestens eine Kollimatorlinse 3, ein erstes aufspaltende optisches Element (erstes Prisma oder erstes Gitter) 4 sowie ein erstes Linsensystem 5 mit mindestens einer ersten Linse. Diese Elemente sind räumlich voneinander getrennt.

Das erste Linsensystem 5 ist mit einer ausgeprägten chromatischen Längsaberration behaftet, so dass effektive Brennweite f(A) sich für verschiedene Wel-

lenlängen $\lambda$ signifikant unterscheidet. Die effektive Brennweite ist dabei die Brennweite des Gesamtsystems. Es kann vorteilhaft sein, mehrere Linsen in Folge im Linsensystem einzusetzen statt einer Einzellinse, da sich hierdurch die chromatische Aberration gezielt einstellen lässt.

Die Beleuchtungs-Abbildungsoptik BA bewirkt, dass durch Licht einer ersten Wellenlänge, welches durch die Beleuchtungs-Abbildungsoptik tritt, die erste Blende 2 an einem Fokuspunkt 21 abgebildet wird, während dieselbe Blende 2 durch Licht einer anderen Wellenlänge durch die Beleuchtungs-Abbildungsoptik an einem anderen Ort 22 abgebildet wird. Erfindungsgemäß sind die Orte entlang eines Liniensegments aufgereiht. Das Liniensegment bildet dabei einen spitzen Winkel mit der Symmetrieachse des ersten Linsensystems 5. Ohne die chromatische Aberration des ersten Linsensystems 5 würde das Liniensegment näherungsweise senkrecht zur Symmetrieachse stehen, da durch das aufspaltende optische Element 4 nur eine Aufspaltung der Fokuslagen quer zur optischen Achse bewirkt werden kann, da dieses ein Prisma oder Gitter ist.

Im Falle der Verwendung einer spaltförmigen konfokalen Blende 2 bewirkt die Beleuchtungs-Abbildungsoptik BA, dass durch Licht einer ersten Wellenlänge, welches durch die Beleuchtungs-Abbildungsoptik tritt, die erste Blende 2 an einem Fokuslinie 21 abgebildet wird, welche in die Papierebene hinein ausgedehnt ist. Dieselbe Blende 2 wird durch Licht einer anderen Wellenlänge durch die Beleuchtungs-Abbildungsoptik auf einer anderen Fokuslinie 22 abgebildet. Erfindungsgemäß sind die Fokuslinien entlang eines Flächensegments aufgereiht. Das Flächensegment wird einerseits durch die räumliche Ausdehnung jeder Fokuslinie und andererseits durch die für verschiedene Wellenlängen unterschiedlichen Lagen der Fokuslinien aufgespannt. Das Flächensegment bildet dabei einen spitzen Winkel mit der Symmetrieachse des ersten Linsensystems 5. Genauer gesagt besteht das Flächensegment aus einer Reihe von Liniensegmenten, die jeweils den Abbildungen eines Punktes der Spaltblende entsprechen. Jedes dieser Liniensegmente bildet einen spitzen Winkel mit der Symmetrieachse des ersten Linsensystems 5.

Im Bereich der Fokuslagen 21 und 22, also im Messbereich der Messeinrichtung, wird ein zu vermessendes Objekt 30 angeordnet. Das Objekt 30 reflektiert dabei zumindest ein Teil des Lichts. Reflektiertes Licht wird durch die Detektions-Abbildungsoptik DA eingefangen, und zwar aus einer räumlichen Richtung, die sich von der Einfallsrichtung unterscheidet. Die Beleuchtungs-Abbildungsoptik und Detektions-Abbildungsoptik sind räumlich getrennte Optiken.

Die Detektions-Abbildungsoptik umfasst bevorzugt ein zweites Linsensystem 6, ein zweites aufspaltendes optisches Element (zweites Prisma oder zweites Gitter) 7, sowie eine Fokussierlinse 8. Die gesamte Detektions-Abbildungsoptik ist dazu eingerichtet, Licht, welches auf der Oberfläche des Objektes 30 fokussiert war und von dieser reflektiert wurde, auf eine zweite Blende 9 abzubilden. Die zweite Blende 9 dient als zweite konfokale Blende - sie ist konfokal zur ersten Blende 2.

Durch die zweite Blende 9 tretendes Licht wird durch einen Detektor 10 erfasst.

Figur 2 zeigt die Beleuchtungs-Abbildungsoptik einer aus dem Stand der Technik bekannten gattungsgemäßen Anordnung einer Messeinrichtung zur Verdeutlichung von sogenannten Abschattungseffekten. In dieser Anordnung erfolgt eine seitliche Auslenkung des Lichts durch ein Prisma 204 und eine Fokussierung durch eine Linse 205. Die Linse 205 verfügt über keine oder eine sehr geringe chromatische Aberration, so dass die Fokuslagen näherungsweise senkrecht zur Symmetrieachse dieser Linse aufgereiht sind. Der Einfallswinkel $\beta$ auf dem Messobjekt 30 ist sehr klein.

Wie aus Fig. 2 ersichtlich, lässt sich der mittlere Einfallswinkel zur Oberfläche der Mittenwellenlänge auf dem Objekt für ein solches Messgerät überschlagen zu:

$$\beta(\lambda_0) \approx \alpha(\lambda_0) \left(1 - \frac{L}{f}\right)$$

Wobei $\alpha(\lambda_0)$ der durch die dispersive Komponente verursachte Beugungswinkel für die Mittenwellenlänge $\lambda_0$ ist, L der Abstand zwischen dispersiver Komponente und Fokussierelement sowie f die Brennweite des Fokussierelements. Dies bedingt, dass $\beta$ stets kleiner als $\alpha$ ist, so dass der Einfallswinkel auf dem Objekt notwendigerweise relativ flach ist.

Um große Winkel $\beta$ (>30°) zu erreichen, muss auch der Winkel $\alpha$ zwischen dem einfallenden Lichtbündel und der optischen Achse der Fokussieroptik Werte >30° erreichen. Dies ist jedoch nicht praktikabel, da bei solch großen Kippwinkeln die optische Abbildungsqualität drastisch verschlechtert wird, verbunden mit einer großen Unschärfe des Fokuspunkts, die sich direkt negativ auf das laterale und axiale Auflösungsvermögen der Messeinrichtung auswirkt.

Andererseits sind große Winkel $\beta$ wünschenswert, da ein flacher Einfallswinkel auf rauen Objekten häufig zu Abschattung führt, was die Messqualität beeinträchtigt. Außerdem ist ein solcher Aufbau notwendigerweise groß und muss nah am Messobjekt platziert werden.

Figur 3a zeigt die geometrischen Zusammenhänge einer beispielhaften bevorzugten Ausführungsform der Erfindung.

Dabei bezeichnet $\alpha(\lambda)$ den Winkel zwischen der auf das erste Linsensystem einfallenden Strahlung und der Symmetrieachse 40 des ersten Linsensystems 5. Der Winkel $\alpha(\lambda)$ ist abhängig von der Wellenlänge.

Im Ausführungsbeispiel der Figur 3a entspricht die Symmetrieachse der Linse 3 ebenfalls der Achse 40 und die Symmetrieachse 40 verläuft auch durch die Öffnung der Blende 2, so dass der Winkel $\alpha(\lambda)$ gleichzeitig dem wellenlängenabhängigen Ablenkungswinkel des ersten aufspaltenden optischen Elements entspricht. Im Falle eines Prismas ist dies der Dispersionswinkel, im Falle eines Gitters die Beugungswinkel der ersten (oder höheren) positiven oder negativen Beugungsordnung.

Die wellenlängenabhängige Brennweite des ersten Linsensystems ist mit $f(\lambda)$ bezeichnet.

Der Abstand H zwischen der verlängerten Symmetrieachse 40 des ersten Linsensystems 5 und dem Fokuspunkt einer Wellenlänge $\lambda$ berechnet sich zu

$$H(\lambda) \approx f(\lambda) * \tan(\alpha(\lambda))$$

Damit die Fokuspunkte auf einem Liniensegment liegen, ergibt sich eine Bedingung für die wellenlängenabhängige Brennweite $f(\lambda)$ des ersten Linsensystems 5 unter Berücksichtigung der Steigung des Liniensegments c und einem Versatz $f_0$.

$$H(\lambda) = c * f(\lambda) - f_0$$

$$f(\lambda) * \tan(\alpha(\lambda)) = c * f(\lambda) - f_0$$

$$f(\lambda) = \frac{f_0}{(c - \tan(\alpha(\lambda)))}$$

Es ergibt sich also eine Beziehung zwischen der Brennweite $f(\lambda)$ und dem Dispersionswinkel $\alpha(\lambda)$ sowie der Steigung c. Der Versatz $f_0$ ist der Arbeitsabstand zwischen Beleuchtungs-Abbildungsoptik und Objekt.

In den meisten Anwendungen ist der Messbereich, und damit $H(\lambda)$klein im Vergleich zur mittleren Brennweite, so dass man die Näherung

$$H(\lambda) \approx f_0 * \tan(\alpha(\lambda))$$

anwenden kann und erhält:

$$f(\lambda) = \frac{f_0}{c}(1 + \tan(\alpha(\lambda))) \approx \frac{f_0}{c}$$

Hierdurch werden Längsverschiebung und Querverschiebung der Fokuslagen näherungsweise entkoppelt. Die Querverschiebung relativ zur Achse 40 wird dabei von der Wellenlängenabhängigkeit des Dispersionswinkels bestimmt, während die Längsverschiebung in Richtung der Achse 40 von der Wellenlängenabhängigkeit der Brennweite des ersten Linsensystems 5 bestimmt wird.

Eine Linearität der Aufreihung der Fokuslagen wird dabei hergestellt, indem der Dispersionswinkel näherungsweise proportional zur Wellenlänge ist, also linear:

$$\alpha(\lambda) = c_1\lambda$$

und die Wellenlängenabhängigkeit $f(\lambda)$der Brennweite des ersten Linsensystems 5 ebenfalls näherungsweise linear ist.

Die Steigung beeinflusst direkt den Einfallswinkel $\beta$ auf dem Objekt:

$$\boldsymbol{\beta(\lambda) = 90° - \mathrm{atan}(c) + \alpha(\lambda)}$$

Vorteilhafterweise wird das erste Linsensystem 5 so ausgelegt, dass ein durch das verwendete Prisma oder Gitter 4 vorgegebener Ablenkungswinkel $\alpha(\lambda)$ (Dispersionswinkel bzw. Beugungswinkel) berücksichtigt wird und ein gewünschter Einfallswinkel der Mittenwellenlänge $\beta_0$ erreicht wird.

Dies hat zur Folge, dass durch eine geeignete Wahl der effektiven chromatischen Aberration des ersten Linsensystems ein zusätzlicher Freiheitsgrad eingeführt wird, welcher eine Wahl des Einfallswinkels ermöglicht.

Anders betrachtet ist bei festem Arbeitsabstand $f_0$ und vorgegebenem Messbereich $H(\lambda)$ der Ablenkungswinkel $\alpha(\lambda)$ festgelegt. Durch den Freiheitsgrad der chromatischen Längsaberration $f(\lambda)$ lässt sich dann der Einfallswinkel $\beta_0$ der Mittenwellenlänge zusätzlich als unabhängiger Wert einstellen.

Vorteilhafterweise wird ein Einfallswinkel $\beta_0$ der Mittenwellenlänge zwischen ca. 30°-60° gewählt, da dies eine geringe Abschattung durch Unebenheiten auf dem Objekt ermöglicht. Bevorzugt wird der Winkel in Abhängigkeit der zu erwartenden Rauheit des Messobjektes gewählt.

In einem weiteren bevorzugten Ausführungsbeispiel der Erfindung, welches in Figur 3b gezeigt ist, ist das erste Linsensystem 5 geneigt zu der Linse 3 und dem ersten aufspaltenden optischen Element 4 angeordnet. Die Symmetrieachse 40, auf die sich alle Winkel beziehen, bezeichnet weiterhin die Symmetrieachse des ersten Linsensystems 40, wobei die Linse 3 und die erste Blende 2 geneigt und dezentriert dazu angeordnet sind.

Besonders bevorzugt sind die Elemente so geneigt zueinander angeordnet, dass die Mittenwellenlänge entlang der Symmetrieachse 40 des ersten Linsensystems 5 einfällt ($\alpha(\lambda_0)$ = 0). Dies hat weniger Abbildungsfehler zur Folge als ein schräger und/oder dezentrierter Einfall.

Die Beziehung $f(\lambda) = \frac{f_0}{(c-\tan(\alpha(\lambda)))}$ bzw.

$f(\lambda) \approx \frac{f_0}{c}$ ist weiterhin gültig. Jedoch entspricht $\alpha(\lambda)$

Nun nicht mehr dem Ablenkungswinkel des ersten aufspaltenden optischen Elements 4, sondern ist um den relativen Neigungswinkel zwischen erstem aufspaltenden optischen Element 4 und Linsensystem 5 verringert. Der Ablenkungswinkel des ersten aufspaltenden optische Elements 4 ist in Figur 3b als $\vartheta(\lambda)$ bezeichnet. Besonders bevorzugt ist $\alpha(\lambda) = \vartheta(\lambda) - \vartheta_0$. $\vartheta_0$ ist der Ablenkungswinkel der Mittenwellenlänge.

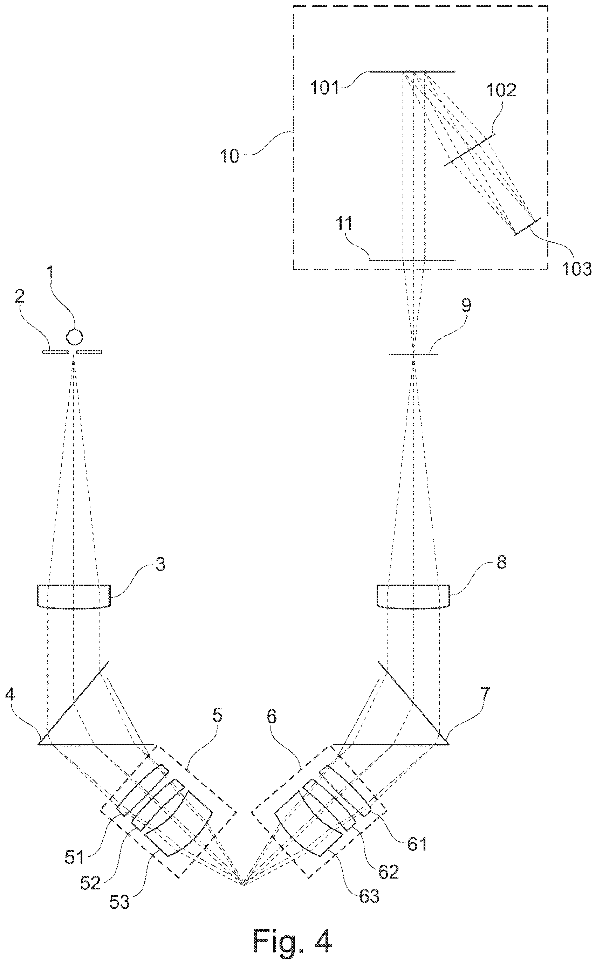

Figur 4 zeigt eine Ausführungsbeispiel der Erfindung.

Es sind die Elemente der chromatischen Messeinrichtung wie bei Figur 1 beschrieben gezeigt, wobei das erste aufspaltende optische Element 4 hier als erstes Prisma ausgeführt ist und auch das zweite aufspaltende optische Element 7 als Prisma ausgeführt ist.

Das erste Linsensystem 5 besteht aus einer Gruppe von drei aufeinanderfolgenden Linsen 51, 52 und 53. Die mittlere Linse 52 hat eine Abbe-Zahl $v_d < 40$. Die anderen Linsen 51, 53 dienen der Korrektur der Abbildung.

Das zweite Linsensystem 6 besteht ebenfalls aus drei aufeinanderfolgenden Linsen 61, 62 und 63, welche den Linsen des ersten Linsensystems 5 entsprechen.

Auf die zweite konfokale Blende 9 folgt eine erste Detektorlinse, welche die Strahlen kollimiert. Diese werden anschließend spektral aufgespalten. Dies erfolgt durch ein Spektrometer bestehend aus einem Diffraktivgitter 101, einer zweiten Detektorlinse 102, welche die Strahlen fokussiert und einem Sensor 103, welcher als Liniensensor ausgeführt ist und die Intensitäten des spektral aufgespaltenen Lichts erfasst.

In einer weiteren bevorzugten Ausführungsform der Erfindung kann das Diffraktivgitter des Spektrometers durch ein Prisma ersetzt werden (Prismenspektrometer). Es ist als vorteilhaft anzusehen, wenn bei Verwendung von Prismen als erstes aufspaltendes Element und zweites aufspaltendes Element ein Prismenspektrometer verwendet wird, während bei Verwendung von Gittern als erstes aufspaltendes Element und zweites aufspaltendes Element ein Gitter im Spektrometer eingesetzt wird. Dies hat den Vorteil, dass die Beziehung zwischen Spektrometerpixel und Höhenwert linear ist. Die Wahl zwischen einem Prismenspektrometer und einem Diffraktivspektrometer ist für alle Ausführungsformen, welche ein Spektrometer umfassen, möglich.

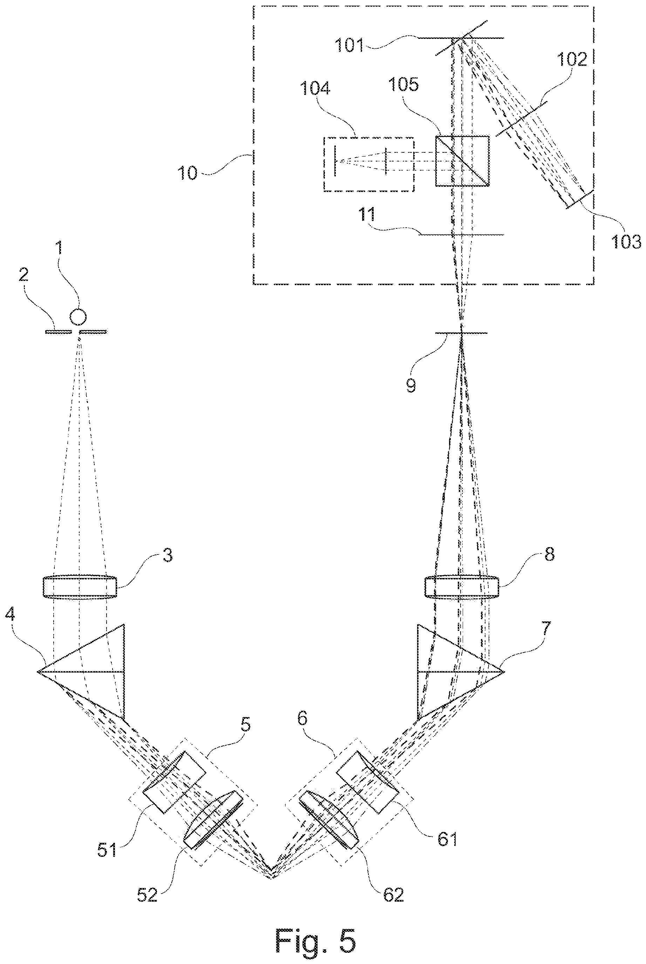

Figur 5 zeigte ein weitere Ausführungsform der Erfindung. Die einzelnen Bestandteile der Figur 5 können frei mit den entsprechenden Bestandteilen der Figur 4 ausgetauscht und kombiniert werden.

Im Unterschied zu Figur 4 bestehen hier das erste und zweite Linsensystem jeweils aus zwei Linsen (51 und 52 bzw. 61 und 62).

Der Detektor 10 umfasst hier zusätzlich zu den Spektrometerbestandteilen Diffraktivgitter 101, Linse 102 und Sensor 103 zusätzlich einen Strahlteilerwürfel 105, welcher das Licht aufteilt. Während ein erster Teil in das Spektrometer geleitet wird und die Intensität wellenlängenabhängig bestimmt wird, wird der zweite Teil in einen Bildsensor 104 geleitet, welcher die Spektralbereiche nicht aufspaltet und ein Gesamtintensitätsbild aufnimmt.

Bevorzugt sind die erste konfokale Blende 2 und die zweite konfokale Blende 9 als Spaltblenden ausgeführt, deren längere Dimension in die Bildebene hinein ausgerichtet ist. Auf diese Weise können mehrere Bildpunkte gleichzeitig erfasst werden, wodurch bei einem Scan eine schnellere Erfassung eines großen Bildbereichs möglich ist. Durch den Bildsensor 104 können Gesamtintensitätswerte entlang des Spaltes aufgenommen werden. Erfolgt ein Scan, so können die aufgenommenen Gesamtintensitätswerte zu einem Bild der Oberfläche mit verbesserter Tiefenschärfe zusammengesetzt werden.

Im Folgenden sind Beispiele von möglichen Ausführungsformen der Messeinrichtung aufgeführt.

Bezugszeichenliste

| | |
|---|---|
| 1 | Lichtquelle |
| 2 | Erste konfokale Blende |
| 3 | Kollimatorlinse |
| 4 | Erstes aufspaltendes optisches Element, erstes Prisma oder erstes Gitter |
| 5 | Erstes Linsensystem |
| 6 | Zweites Linsensystem |
| 7 | Zweites aufspaltendes optisches Element, zweites Prisma oder zweites Gitter |
| 8 | Fokussierlinse |
| 9 | Zweite konfokale Blende |
| 10 | Detektor |
| 11 | Erste Detektorlinse |
| 21 | Erster Fokuspunkt |
| 22 | Zweiter Fokuspunkt |
| 30 | Objekt |
| 40 | Symmetrieachse des ersten Linsensystems |
| 41 | Liniensegment |
| 51 | Erste Linse des ersten Linsensystems |
| 52 | Zweite Linse des ersten Linsensystems |
| 53 | Dritte Linse des ersten Linsensystems |
| 61 | Erste Linse des zweiten Linsensystems |
| 62 | Zweite Linse des zweiten Linsensystems |
| 63 | Dritte Linse des zweiten Linsensystems |
| 101 | Spektrometergitter |
| 102 | Zweite Detektorlinse |
| 103 | Sensor |
| 104 | Bildsensor |
| 105 | Strahlteiler |
| BA | Beleuchtungs-Abbildungsoptik |
| DA | Detektions-Abbildungsoptik |
| $\alpha$ | Dispersionswinkel |
| $\beta$ | Einfallswinkel |
| $f(\lambda)$ | Brennweite des ersten Linsensystems |

**Patentansprüche**

1. Chromatisch konfokale Messeinrichtung, umfassend

   - eine Lichtquelle (1), welche Licht einer Mehrzahl von Wellenlängen emittiert, insbesondere ein kontinuierliches Spektrum,
   - eine erste konfokale Blende (2), durch welche Licht der Lichtquelle (1) tritt
   - eine Beleuchtungs-Abbildungsoptik (BA), umfassend mindestens
   - ein erstes aufspaltendes optisches Element (4), welches als Prisma oder Gitter ausgeführt ist,
   - wobei das Licht kollimiert in das erste aufspaltende optische Element (4) tritt,
   - sowie ein erstes Linsensystem (5) mit mindestens einer ersten Linse, welche vom ersten aufspaltenden optischen Element (4) räumlich getrennt ist, wobei die effektive Brennweite ($f(\lambda)$) des ersten Linsensystems (5) sich für verschiedene Wellenlängen $\lambda$ signifikant unterscheidet,
   - so dass die Beleuchtungs-Abbildungsoptik (BA) derart ausgebildet ist, dass Fokuspunkte unterschiedlicher Wellenlängen an unterschiedlichen Orten gebildet werden, wobei die Orte entlang eines Liniensegments (41) liegen, welches einen spitzen Winkel zur Symmetrieachse (40) des ersten Linsensystems (5) bildet
   - wobei die Messeinrichtung dazu eingerichtet ist, ein Objekt (30) zu vermessen, welches das Liniensegment (41) schneidet und zumindest einen Teil des Lichts reflektiert,
   - wobei die Messeinrichtung eine Detektions-Abbildungsoptik (DA) umfasst, welche räumlich getrennt von der Beleuchtungs-Abbildungsoptik (BA) ist,
   - und wobei die Detektions-Abbildungsoptik (DA) dazu eingerichtet ist, von dem Objekt (30) reflektiertes Licht ausschließlich aus einer Richtung zu empfangen, welche sich von der Richtung, aus der das Beleuchtungslicht auf das Objekt einfällt, unterscheidet,
   - wobei die Detektions-Abbildungsoptik (DA) dazu eingerichtet ist, die Fokuspunkte aller Wellenlängen auf eine zweite konfokale Blende (9) abzubilden und
   - wobei die Messeinrichtung einen Detektor (10) umfasst, welcher dazu eingerichtet ist, Intensität des durch die zweite Blende (9) tretenden Lichts zu erfassen.

2. Messeinrichtung nach einem der vorhergehenden Ansprüche, **dadurch gekennzeichnet, dass** die Brennweite des ersten Linsensystems (5) für die kleinste Wellenlänge der Lichtquelle (1) sich von der Brennweite des ersten Linsensystems für die größte Wellenlänge der Lichtquelle (1) um einen Betrag $\delta f$ unterschiedet, wobei der Quotient aus $\delta f$ und der Brennweite des ersten Linsensystems (5) für die mittleren Wellenlänge $f_0$ mehr als 5% beträgt.

3. Messeinrichtung nach einem der vorhergehenden Ansprüche, **dadurch gekennzeichnet, dass** die longitudinale Aufspaltung der Fokuspunkt-Lagen mindestens 0,1-mal die laterale Aufspaltung der Fokuspunkt-Lagen beträgt.

4. Messeinrichtung nach einem der vorhergehenden Ansprüche, **dadurch gekennzeichnet, dass** das erste Linsensystem (5) mindestens eine Linse mit einer Abbe-Zahl kleiner 40 umfasst.

5. Messeinrichtung nach einem der vorhergehenden Ansprüche, **dadurch gekennzeichnet, dass** das Liniensegment (41), welche durch die Fokuspunkt-Lagen der unterschiedlichen Wellenlängen geht, einen Winkel kleiner als 60° und/oder größer als 30° zur Symmetrieachse (40) des ersten Linsensystems (5) beträgt, insbesondere gleich 45°.

6. Messeinrichtung nach einem der vorhergehenden Ansprüche, **dadurch gekennzeichnet, dass** die Beleuchtungs-Abbildungsoptik (BA) eine Kollimatorlinse (3) umfasst, welche zwischen Lichtquelle (1) und erstem aufspaltendem optischen Element (4) angeordnet ist und achromatisch ist.

7. Messeinrichtung nach einem der vorhergehenden Ansprüche, **dadurch gekennzeichnet, dass** das erste aufspaltende optische Element (4) ein Gitter ist und das erste Linsensystem (5) mindestens eine Diffraktivlinse umfasst.

8. Messeinrichtung nach einem der vorhergehenden Ansprüche, **dadurch gekennzeichnet, dass** das erste Linsensystem (5) geneigt zum ersten aufspaltenden optischen Element (4) angeordnet ist, insbesondere derart, dass die mittlere Wellenlänge parallel zur Symmetrieachse (40) des ersten Linsensystems (5) auf das erste Linsensystem (5) fällt.

9. Messeinrichtung nach einem der vorhergehenden Ansprüche, **dadurch gekennzeichnet, dass** die erste konfokale Blende (2) eine Schlitzblende ist, wobei statt Fokuspunkten für jede Wellenlänge Fokuslinien gebildet werden, welche entlang einem Flächensegment angeordnet sind welches einen spitzen Winkel zur Symmetrieachse (40) des ersten Linsensystems (5) bildet.

10. Messeinrichtung nach einem der vorhergehenden Ansprüche, **dadurch gekennzeichnet, dass** die Detektions-Abbildungsoptik (DA) ein zweites aufspaltendes optisches Element (7), welches als Prisma oder Gitter ausgeführt ist, und ein zweites Linsensystem (6) umfasst.

11. Messeinrichtung nach Anspruch 10, **dadurch gekennzeichnet, dass** das zweite aufspaltende optische Element (7) baugleich zum ersten aufspaltenden optischen Element (4) ausgeführt ist und dass das zweite Linsensystem (6) baugleich zum ersten Linsensystem (5) ausgeführt ist.

12. Messeinrichtung nach einem der vorhergehenden Ansprüche, **dadurch gekennzeichnet, dass** der Detektor (10) ein Spektrometer umfasst und dazu eingerichtet ist, Intensitätsmaxima der Wellenlängen zu bestimmen und daraus Abstandswerte des Objektes zu berechnen.

**Claims**

1. Chromatic confocal measuring device, comprising

   - a light source (1) which emits light of a plurality of wavelengths, in particular a continuous spectrum,
   - a first confocal aperture (2) through which light from the light source (1) passes
   - an illumination imaging optics (BA) comprising at least
   - a first splitting optical element (4), which is designed as a prism or grating,
   - wherein the light enters the first splitting optical element (4) in a collimated manner,
   - as well as a first lens system (5) with at least one first lens, which is spatially separated from the first splitting optical element (4), wherein the effective focal length (f($\lambda$)) of the first lens system (5) differs significantly for different wavelengths ($\lambda$),
   - such that the illumination-imaging optics (BA) are configured to form focal points of different wavelengths at different locations, said locations being along a line segment (41) forming an acute angle to the axis of symmetry (40) of the first lens system (5)
   - wherein the measuring device is arranged to measure an object (30) which intersects the line segment (41) and reflects at least a part of the light
   - wherein the measuring device comprises a detection-imaging optics (DA) which is spatially separated from the illumination-imaging optics (BA),
   - and wherein the detection imaging optics (DA) is arranged to receive light reflected from the object (30) exclusively from a direction which is different from the direction from which the illumination light is incident on the object,
   - wherein the detection imaging optics (DA) are adapted to image the focal points of all wavelengths onto a second confocal aperture (9), and
   - wherein the measuring device comprises a detector (10) which is adapted to detect intensity of the light passing through the second aperture (9)

2. Measuring device according to one of the preceding claims, **characterized in that** the focal length of the first lens system (5) for the smallest wavelength of the light source (1) differs from the focal length of the first lens system for the largest wavelength of the light source (1) by an amount $\delta f$, the quotient of $\delta f$ and the focal length of the first lens system (5) for the mean wavelength $f_0$ being more than 5%.

3. Measuring device according to one of the preceding claims, **characterized in that** the longitudinal splitting of the focal point layers is at least 0.1 times the lateral splitting of the focal point layers.

4. Measuring device according to one of the preceding claims, **characterized in that** the first lens system (5) comprises at least one lens with an Abbe number smaller than 40.

5. Measuring device according to one of the preceding claims, **characterized in that** the line segment (41) passing through the focal point positions of the different wavelengths has an angle smaller than 60° and/or larger than 30° to the axis of symmetry (40) of the first lens system (5), in particular equal to 45°.

6. Measuring device according to one of the preceding claims, **characterized in that** the illumination imaging optics (BA) comprises a collimator lens (3) which is arranged between light source (1) and first splitting optical element (4) and is achromatic.

7. Measuring device according to one of the preceding claims, **characterized in that** the first splitting optical element (4) is a grating and the first lens system (5) comprises at least one diffractive lens.

8. Measuring device according to one of the preceding claims, **characterized in that** the first lens system (5) is arranged inclined to the first splitting optical element (4), in particular in such a way that the average wavelength falls on the first lens system (5) parallel to the axis of symmetry (40) of the first lens system (5).

9. Measuring device according to one of the preceding claims, **characterized in that** the first confocal aperture (2) is a slit aperture, whereby instead of focal points for each wavelength, focal lines are formed which are arranged along a surface segment which forms an acute angle to the axis of symmetry (40) of the first lens system (5).

10. Measuring device according to one of the preceding claims, **characterized in that** the detection imaging optics (DA) comprises a second splitting optical element (7), which is designed as a prism or grating, and a second lens system (6).

11. Measuring device according to claim 10, **characterized in that** the second splitting optical element (7) is designed identically to the first splitting optical element (4) and that the second lens system (6) is designed identically to the first lens system (5).

12. Measuring device according to one of the preceding claims, **characterized in that** the detector (10) comprises a spectrometer and is set up to determine intensity maxima of the wavelengths and to calculate distance values of the object therefrom.

## Revendications

1. Dispositif de mesure confocal chromatique, comprenant

    - une source de lumière (1), qui émet de la lumière d'une pluralité de longueurs d'onde, en particulier un spectre continu,
    - un premier diaphragme confocal (2) à travers lequel entre la source de lumière (1)
    - une optique de formation d'image/d'éclairage (BA), comprenant au moins
    - un premier élément optique de séparation (4), qui est conçu sous la forme d'un prisme ou d'une grille,
    - dans lequel la lumière entre de manière collimatée dans la premier élément optique de séparation (4) dissocié,
    - ainsi qu'un premier système de lentilles (5) comprenant au moins une première lentille, qui est séparée spatialement du premier élément optique (4) de séparation, dans lequel la distance focale ($f(\lambda)$) effective du premier système de lentilles (5) se distingue de manière significative pour les différentes longueurs d'onde $\lambda$,
    - de sorte que l'optique de formation d'image/d'éclairage (BA) soit conçue de manière à ce que les points focaux des différentes longueurs d'onde sont formés à différents emplacements, les emplacements se situant le long d'un segment de lentille (41), qui forme un angle aigu par rapport à l'axe symétrique (40) du premier système de lentilles (5)
    - dans lequel le dispositif de mesure est conçu pour mesurer un objet (30), qui coupe le segment de lentille (41) et réfléchit au moins une partie de la lumière,
    - dans lequel le dispositif de mesure comprend une optique de formation d'image/détection (DA) qui est séparée spatialement de l'optique de formation d'image/d'éclairage (BA),
    - et dans lequel l'optique de formation d'image/détection (DA) est conçu pour recevoir en provenance de l'objet (30) la lumière réfléchie exclusivement d'une direction, qui se distingue de la direction, depuis laquelle la lumière d'éclairage est incidente sur l'objet,
    - dans lequel l'optique de formation d'image/détection (DA) est conçue pour former les points focaux de toutes les longueurs d'onde sur un second diaphragme confocal (9) et
    - dans lequel le dispositif de mesure comprend un détecteur (10) qui est conçu pour détecter l'intensité de la lumière entrant à travers le second diaphragme (9).

2. Dispositif de mesure selon l'une quelconque des revendications précédentes, **caractérisé en ce que** la distance focale du premier système de lentilles (5) pour la plus petite longueur d'onde de la source de lumière (1) se distingue de la distance focale du premier système de lentilles pour la plus grande longueur d'onde de la source de lumière (1) d'une quantité $\delta f$, dans lequel le quotient de $\delta f$ et de la distance focale du premier système de lentilles (5) pour la longueur d'onde moyenne $f_0$ s'élève à plus de 5 %.

3. Dispositif de mesure selon l'une quelconque des revendications précédentes, **caractérisé en ce que** la séparation longitudinale des emplacements de point focal s'élève à au moins 0,1 fois la séparation latérale des emplacements de point focal.

4. Dispositif de mesure selon l'une quelconque des revendications précédentes, **caractérisé en ce que** le premier système de lentilles (5) comprend au moins une lentille ayant un nombre d'Abbe inférieur à 40.

5. Dispositif de mesure selon l'une quelconque des revendications précédentes, **caractérisé en ce que** le segment de lentille (41) qui passe par les emplacements de point focal des différentes longueurs d'onde comprend un angle inférieur à 60° et/ou supérieur à 30° par rapport à l'axe de symétrie (40) du premier système de lentilles (5), en particulier égal à 45°.

6. Dispositif de mesure selon l'une quelconque des revendications précédentes, **caractérisé en ce que** l'optique de formation d'image/d'éclairage (BA) comprend une lentille de collimateur (3) qui est disposée entre la source de lumière (1) et le premier élément optique de séparation (4) et est achromatique.

**7.** Dispositif de mesure selon l'une quelconque des revendications précédentes, **caractérisé en ce que** le premier élément optique de séparation (4) est une grille et le premier système de lentille (5) comprend au moins une lentille de diffraction.

**8.** Dispositif de mesure selon l'une quelconque des revendications précédentes, **caractérisé en ce que** le premier système de lentilles (5) est incliné par rapport au premier élément optique de séparation (4), en particulier de manière à ce que la longueur d'onde moyenne soit parallèle à l'axe de symétrie (40) du premier système de lentilles (5) sur le premier système de lentilles (5).

**9.** Dispositif de mesure selon l'une quelconque des revendications précédentes, **caractérisé en ce que** le premier diaphragme confocal (2) est un diaphragme à fente, dans lequel des lignes focales sont formées pour chaque longueur d'onde à la place de points focaux, qui sont disposées le long d'un segment de surface, lequel forme un angle aigue par rapport à l'axe de symétrie (40) du premier système de lentilles (5).

**10.** Dispositif de mesure selon l'une quelconque des revendications précédentes, **caractérisé en ce que** l'optique de formation d'image/détection (D1) comprend un second élément optique de séparation (7) qui est conçu sous la forme de prisme ou de grille et un second système de lentilles (6).

**11.** Dispositif de mesure selon la revendication 10, **caractérisé en ce que** le second élément optique de séparation (7) est de construction identique que le premier élément optique (4) de séparation et **en ce que** le second système de lentilles (6) est de construction identique que le premier système de lentilles (5).

**12.** Dispositif de mesure selon l'une quelconque des revendications précédentes, **caractérisé en ce que** le détecteur (10) comprend un spectromètre et est conçu pour déterminer l'intensité maximum et ainsi les valeurs de distance de l'objet.

Fig. 1

Fig. 2

Stand der Technik

Fig. 3a

Fig. 3b

Fig. 4

Fig. 5

**EP 3 891 465 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2076733 B1
- US 2012206710 A1
- DE 102011117523 B3